# EUROPEAN PATENT SPECIFICATION

(11) **EP 4 260 981 B1**
(45) Date of publication and mention of the grant of the patent: **23.07.2025**
(21) Application number: 23167101.7
(22) Date of filing: 06.04.2023
(51) Int. Cl.: B24D 15/04, B24D 15/08

(54) **A TOOL FOR STEELING A ROTARY KNIFE**
WERKZEUG ZUM ABZIEHEN EINES ROTIERENDEN MESSERS
OUTIL D'AFFÛTAGE D'UN COUTEAU ROTATIF

(30) Priority: 11.04.2022 US 202217717998
(43) Date of publication of application: 18.10.2023
(73) Proprietor: Hantover, Inc., Overland Park, Kansas 66210 (US)
(72) Inventor: Curnett, Ronald J., Cross Timbers, 65634 (US); Feeler, Craig E., Independence, 64057 (US)
(74) Representative: Uexküll & Stolberg

(56) References cited:
- EP-A1- 2 937 179
- EP-B1- 2 704 877
- US-A1- 2010 112 921
- US-A1- 2020 368 877
- US-B1- 9 545 703

## Description

### FIELD OF THE INVENTION

The present invention concerns tools for steeling the blades of rotary knives.

### BACKGROUND

The blades of sharp tools call for regular maintenance in order to preserve the ability to continue cutting.

Such maintenance consists of regular sharpening operations during which the cutting edge of the sharp tool is corrected using a suitable surface by removing at least some of the surface of the cutting edge of the sharp tool. However, the need to sharpen the cutting edge can be delayed by steeling the sharp tool, wherein a steeling component aligns the cutting edge instead of removal of the cutting edge surface as required with sharpening.

However, conventional steels are not properly adapted for use with rotary knifes. Accordingly, rotary knife blades often must be replaced instead of being maintained.

US 2010/112921 A1 discloses a steeling tool comprising the features of the preamble of claim 1.

US 9 545 703 B1 discloses a steeling tool having two wide support members, and a narrow slot therebetween. Steeling members are not pivotally attached to the support members, and are associated with a first pair of stops in an initial position and with a shared central stop in a terminal position. Leaf springs bias the steeling members.

EP 2 937 179 A1 discloses a steeling tool having two wide, open frame-like support members with a narrow slot therebetween. Steeling members are attached via a linkage system and are biased by elastic links (i.e., springs). The steeling members make initial contact with two stops, whereas terminal contact takes place against a shared central stop.

EP 2 704 877 B1 describes a steeling tool having two wide support member assemblies flanking a narrow slot. Steeling members are pivotally attached to the support member assemblies, and are in initial contact with two stops. Termination of downward movement of the tool blade is achieved by V-shaped, tapering slot walls which limit downward movement of the tool blade without use of an additional stop for the steeling members.

US 2020/368877 A1 discloses a stationary sharpener including two large support members defining a narrow slot in which steeling members are internally housed.

### BRIEF SUMMARY

A tool for steeling a rotary knife according to the present invention comprises the features of claim 1. Preferred embodiments of the invention are set out in the dependent claims.

Advantages of these and other embodiments will become more apparent to those skilled in the art from the following description of the exemplary embodiments which have been shown and described by way of illustration. As will be realized, the present embodiments described herein may be capable of other and different embodiments, and their details are capable of modification in various respects. Accordingly, the drawings and description are to be regarded as illustrative in nature and not as restrictive.

### BRIEF DESCRIPTION OF THE DRAWINGS

The Figures described below depict various aspects of apparatuses and methods disclosed therein. It should be understood that each Figure depicts an embodiment of a particular aspect of the disclosed apparatuses and methods, and that each of the Figures is intended to accord with a possible embodiment thereof. Further, wherever possible, the following description refers to the reference numerals included in the following Figures, in which features depicted in multiple Figures are designated with consistent reference numerals.
Fig. 1 is a perspective view of a steeling tool according to a preferred embodiment of the present invention while in use with a rotary knife;
Fig. 2 is a perspective enlarged view of the steeling tool while in use with the rotary knife, depicting the knife having shifted the knife interface of the tool to a terminal interface position;
Fig. 3 is a front enlarged view of the steeling tool and rotary knife in the condition shown in Fig. 2;
Fig. 4 is a perspective view of the steeling tool in a disengaged position, with the knife wholly removed;
Fig. 5 is a perspective view of the steeling tool from below the steeling tool;
Fig. 6 is a front view of the steeling tool in the disengaged position;
Fig. 7 is a side view of the steeling tool;
Fig. 8 is a rear view of the steeling tool;
Fig. 9 is a perspective view of the steeling tool, with the knife removed, but showing the steeling components located in positions corresponding to the terminal interface position of the knife interface;
Fig. 10 is a front view of the steeling tool as shown in Fig. 9;
Fig. 11 is a front enlarged front view of the steeling tool;
Figure 12 is a cross-sectional view taken along line 12-12 of Figure 11;
Fig. 13 is a perspective exploded view of the steeling tool; and
Fig. 14 is another perspective exploded view of the steeling tool.

Unless otherwise indicated, the drawings provided herein are meant to illustrate features of embodiments of this disclosure. These features are believed to be applicable in a wide variety of systems comprising one or more embodiments of this disclosure. As such, the drawings are not meant to include all conventional features known by those of ordinary skill in the art to be required for the practice of the embodiments disclosed herein. While the drawings do not necessarily provide exact dimensions or tolerances for the illustrated components or structures, the drawings are to scale with respect to the relationships between the components of the structures illustrated in the drawings.

### DETAILED DESCRIPTION

Throughout the following description, like elements will be referred to using the same reference numbers whenever possible. Additionally, certain phrases may be used interchangeably. For example, a person having ordinary skill in the art will understand that the terms "steel," "tool," and "steeling tool" may be used interchangeably. Similarly, the terms "knife," "rotary knife," "blade," "rotary knife blade," "cutting edge of a rotary knife," and "cutting edge" may also (but necessarily) be used interchangeably in this description.

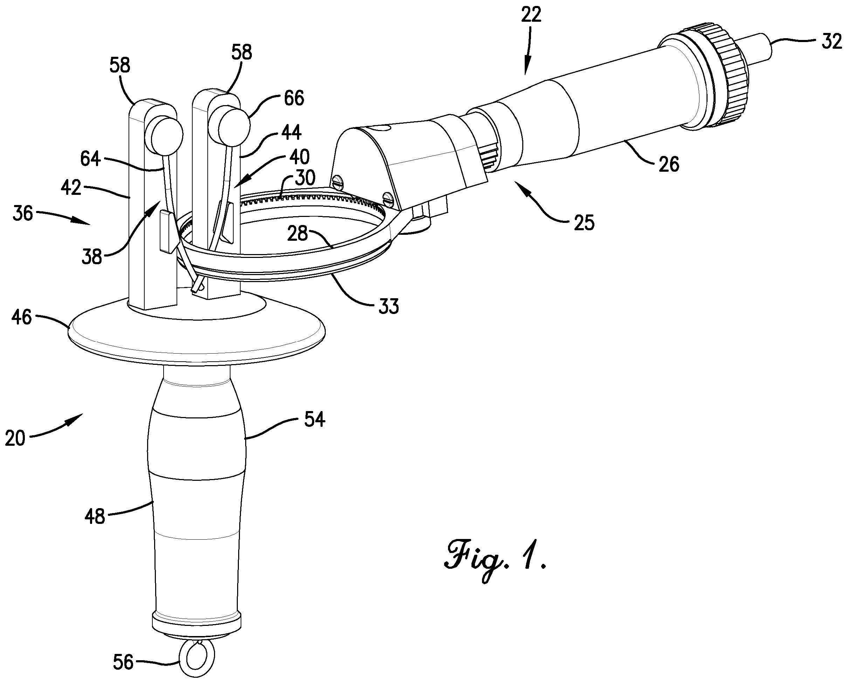

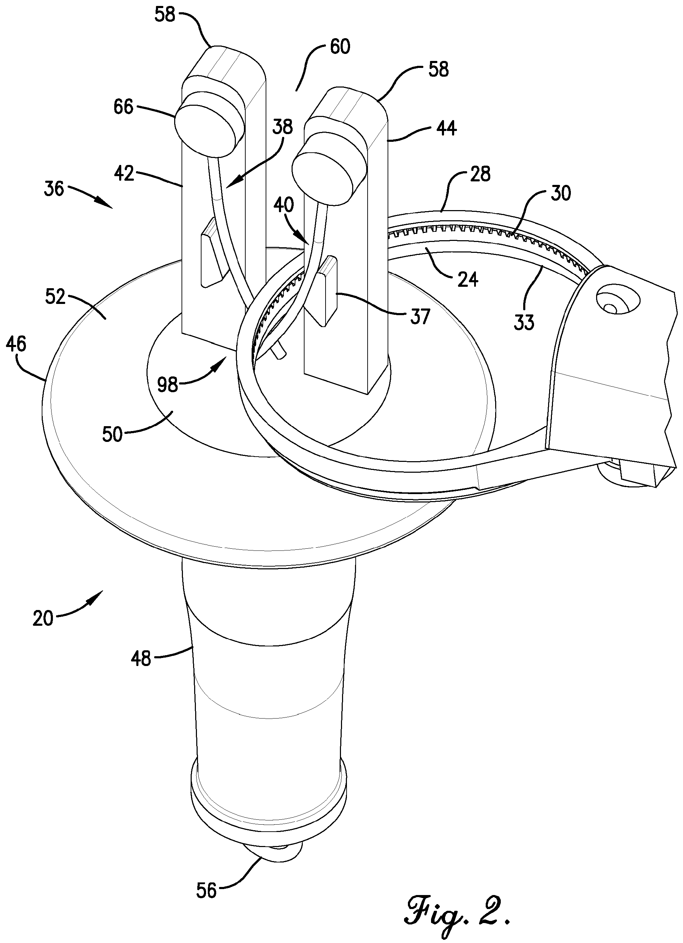

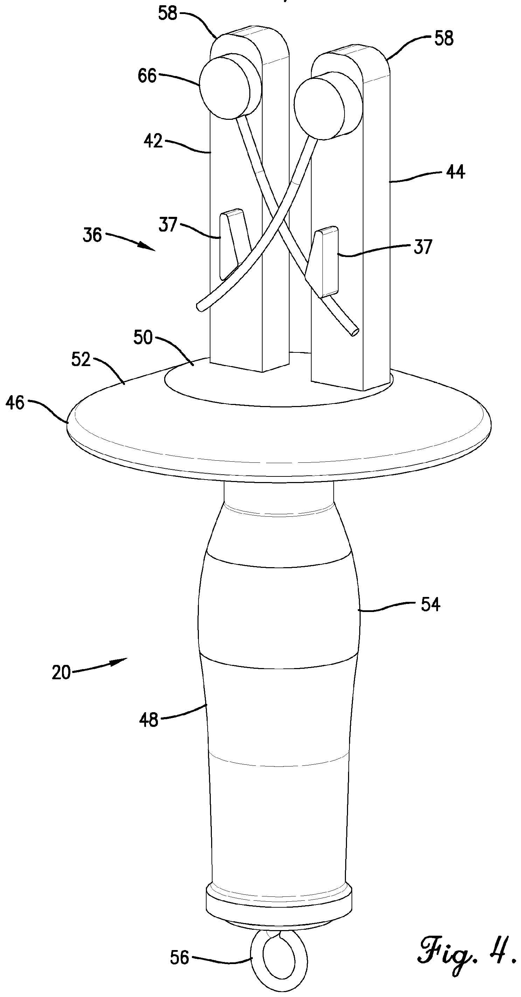

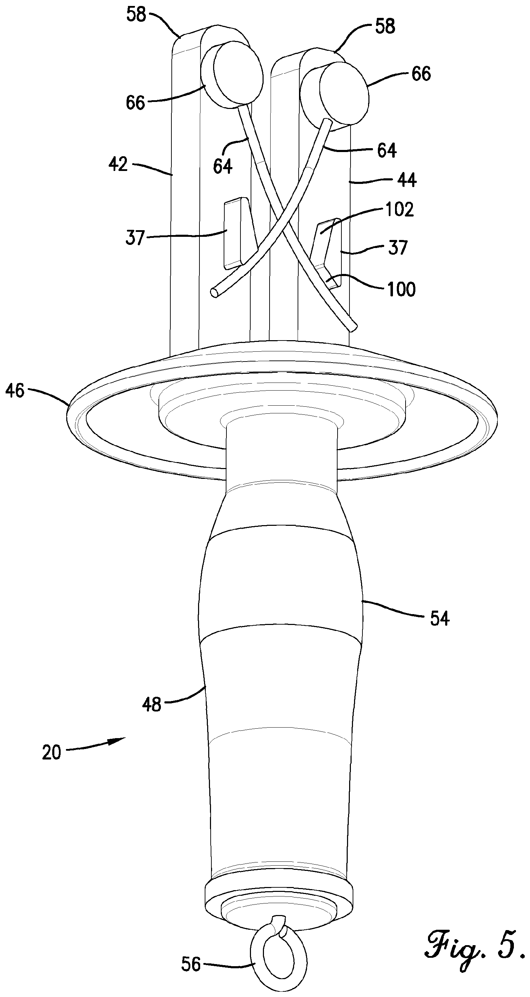

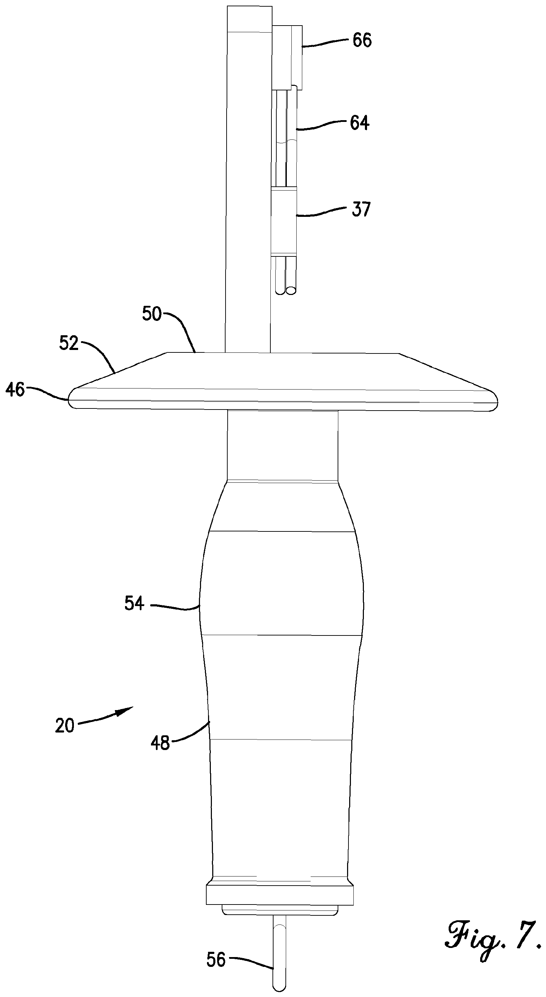

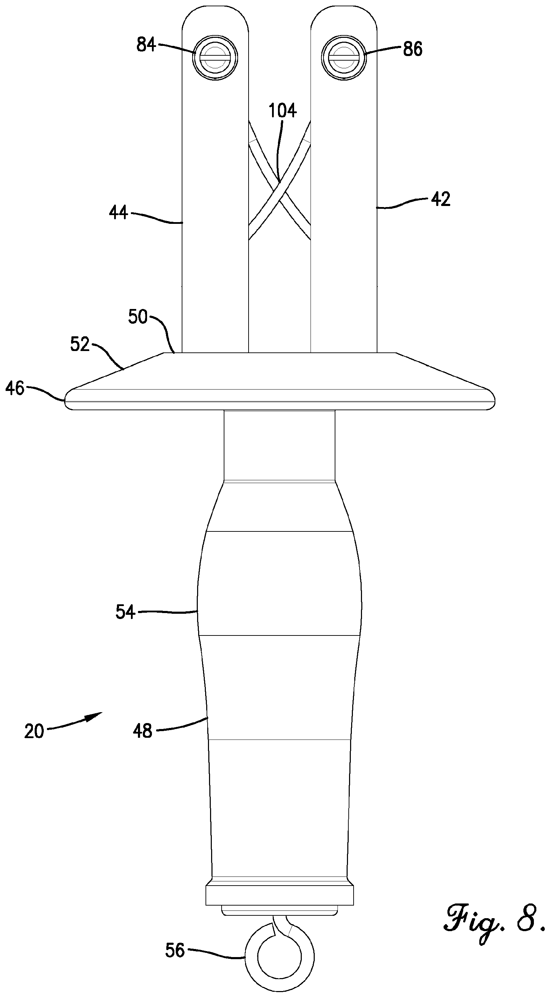

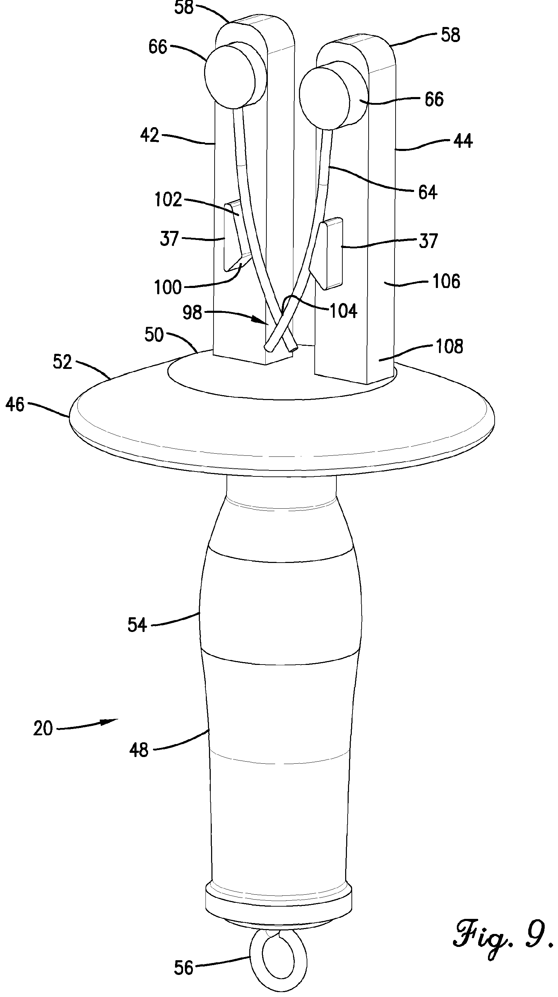

Figures 1-10 depict an exemplary steeling tool 20 according to a preferred embodiment of the present invention. The steeling tool 20 is preferably used to steel a rotary knife 22. The rotary knife is suitable for use in animal slaughterhouse operation for dressing an animal carcass. However, according to certain aspects of the present invention, the steeling tool 20 may be used to steel other powered tools, knives (such as straight blade knives), or other tools having blades and/or a cutting edge requiring routine steeling.

In one embodiment, the rotary knife 22 preferably includes an annular rotatable blade 24, a knife handle 26, and a blade housing 28 (see particularly Figs. 1-3). The housing 28 rotatably supports the blade 24 on the main knife body 25. The blade 24 includes a ring of teeth 30 drivingly intermeshed with a pinion gear (not shown), such that rotation of the pinion gear causes rotation of the blade 24. The pinion gear is drivingly connected to a suitable power source. In the illustrated embodiment, the power source includes an electric motor (not shown) and cable or flex-shaft (not shown) contained in a casing 32, although other suitable power sources (e.g., a pneumatic drive) are within the ambit of the present invention. Axially opposite the toothed ring 30 is an annular cutting edge 33. Those ordinarily skilled in the art will appreciate that the cutting edge 33 requires maintenance (e.g., steeling and sharpening) to ensure efficient knife operation.

The blade 24 is circular in shape, with the cutting edge 33 defining a central opening 34. The opening 34 customarily presents a diameter ranging between about 2.54 cm (one inch (1")) and 15.24 cm (six inches (6")), although other blade dimensions are encompassed by certain principles of the present invention. As previously noted, the steel 20 is not limited to use with the illustrated rotary knife 22. For example, a straight blade knife (not shown) may also be maintained with the steel 20, according to certain aspects of the present invention.

In a preferred embodiment of the present invention, the steeling tool 20 broadly includes a frame 36, a pair of steeling component assemblies 38,40 supported on the frame 36, and a pair of spaced apart stops 37 that serve to limit operational positioning of the assemblies 38,40.

Turning initially to the frame 36, an integrally formed body preferably defines the various elements of the frame. Such preferred integral fabrication may be accomplished in any suitable manner, such as molding, casting, machining, etc. The frame 36 is preferably formed of a suitable synthetic resin material, such as plastic (including but not limited to polyethylene terephthalate, ultra high molecular weight polyethylene, etc.). However, those ordinarily skilled in the art will appreciate that certain aspects of the present invention contemplate a frame having discretely manufactured components that are then suitably assembled (e.g., using fasteners, adhesive, welding, etc.). The illustrated frame 36 broadly includes a first support member 42, a second support member 44, a base 46, and a handle 48, all of which are preferably integrally formed as noted.

The base 46 preferably presents a central, circular-shaped, flat top portion 50 and a circumferential tapered portion 52 that extends continuously around the top portion 50. The tapered portion angles in a direction toward the handle 48. In the illustrated embodiment, the support members 42, 44 project perpendicularly from the top portion of the base 50, although certain aspects of the present invention contemplate support members that project together at a different angle than ninety degrees (90), project at different obtuse angles relative to the top portion, etc. Moreover, according to some aspects of the present invention, the base may be alternatively configured. For example, the base may alternatively present a top face that is entirely flat or angled, a tapered portion that is discontinuous (e.g., to form arcuately spaced segments), or the base may be removed altogether.

The preferred handle 48 projects from the underside of the base 46 in a direction that is generally opposite of the support members 42, 44. The handle 48 presents a curvilinear outer face 54 that is configured to be grasped by a user. The preferred handle 48 presents an overall axial length A (measured from the base to the distal tip of the handle) of about 10.16 cm to 20.32 cm (four (4) to eight (8) inches) and, more preferably, about 15.24 cm (six (6) inches). One skilled in the art will recognize, however, that the certain aspects of the present invention encompass a frame having alternative handle designs or lacking a handle entirely.

In the illustrated embodiment, a hook 56 projects from the distal end of the handle 48. The illustrated hook 56 is threadably secured to the distal end of the handle, although the hook may alternatively be integrally formed with the handle or otherwise fixed in place (e.g., with adhesive, welding, snap-fit, etc.). The hook 56 is preferably provided to facilitate hanging of the tool on a belt loop, another similar user element (e.g., a pant pocket), or another supporting structure, when the tool 20 is not actively in use.

As noted, the support members 42, 44 project from the top portion 50 of the base 46, in a direction opposite the handle 48. In the illustrated embodiment, the support members 42, 44 are identically shaped and equal in dimension. That is to say, the preferred first and second support members 42, 44 have the same length and, because the top portion 50 of the base 46 is flat, present outer ends 58 that are spaced the same distance from the base. Furthermore, the support members 42, 44 have the same cross-sectional shape. Except for the outer rounded end 58, each support member 42, 44 has a continuous cross-sectional dimension, which in the illustrated embodiment is rectangular in shape. The support members 42, 44 are spaced equally from the center of the top portion 50 of the base 46, and the tapered portion of the base 52 projects radially outward from the support members 42, 44. Moreover, the support members 42, 44 define a knife-receiving slot 60 that extends lengthwise along a slot axis B (which generally corresponds and is aligned with an axis of the tool).

Because of the preferred construction of the support members 42, 44, the knife-receiving slot 60 has a constant width (or cross-sectional dimension) measured between the support members 42, 44 in a direction that is perpendicular to the slot length. However, according to certain aspects of the present invention, the support members may be alternatively configured (e.g., present other orthogonal, polygonal, or curvilinear shapes, present different shapes between the members, present shapes and/or cross-sectional dimensions that vary along the length of each support member, extend obtusely from the base, etc.), and the slot may consequently vary in configuration.

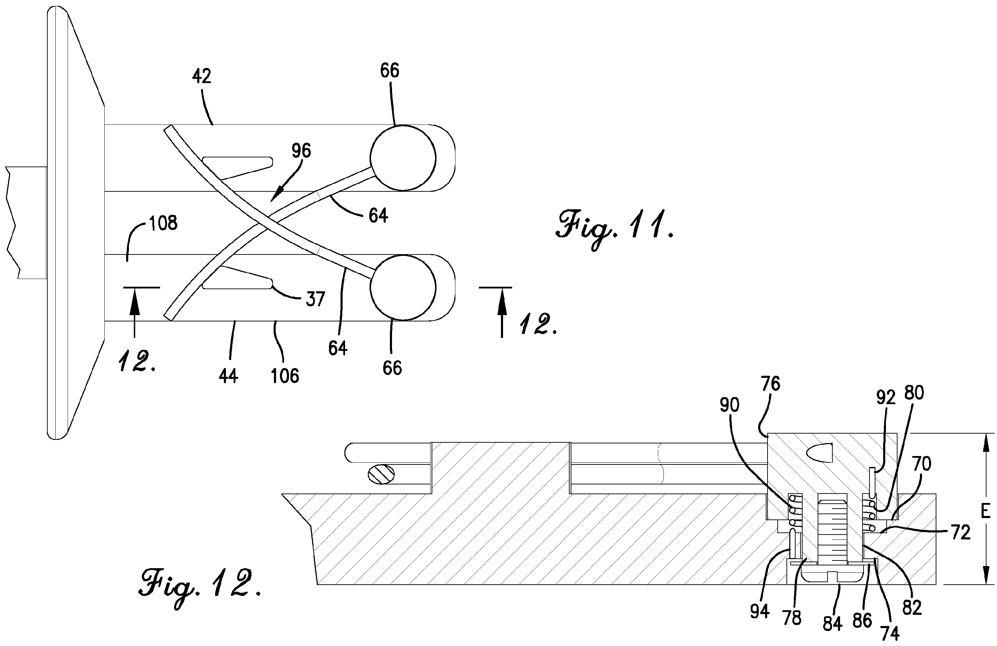

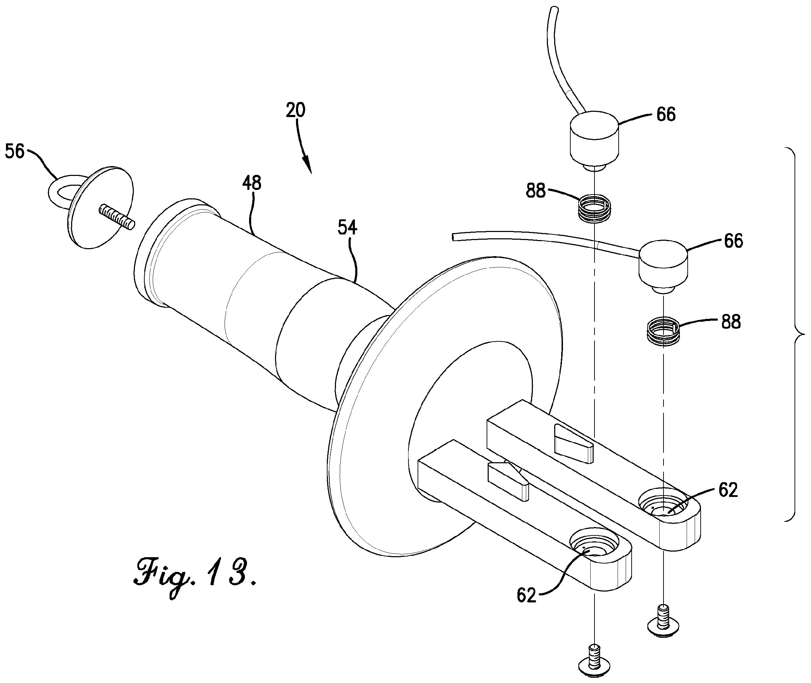

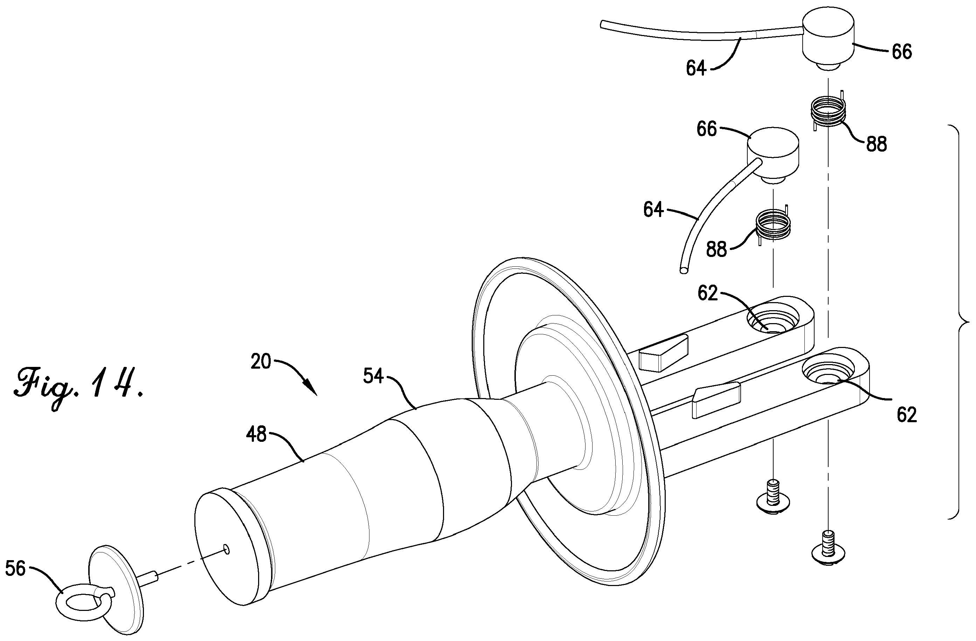

As perhaps best shown in Figs. 12-14, each illustrated support member 42, 44 has an aperture 62 adjacent the outer rounded end 58. (For the brake brevity, the apertures 62 are similarly numbered in the drawings.) The aperture 62 extends entirely through the support member 42, 44 (between the front and back faces of the member). The aperture 62 is preferably defined by a stepped surface 68 that presents a front shoulder 70, an intermediate shoulder 72, and a back shoulder 74. The purposes of the apertures and shoulders will be explained further below.

Each of the illustrated steeling component assemblies 38, 40 is supported on a respective one of the support members 42, 44. The steeling component assemblies 38, 40 include steeling components 64 which engage the cutting edge 33 of the knife 22 during steeling operations. (For the brake brevity, the steeling components 64 are similarly numbered in the drawings.) In the preferred embodiment, the steeling components 64 are each slightly curved along their length and present a circular cross-sectional shape. Each steeling component 64 is preferably formed of a wire-like metal material, although other shapes, sizes, configurations (e.g., each or one of the components comprising a double-wire construction), and material types are within the ambit of certain aspects of the present invention. Other than the steeling components 64 being slightly offset in a fore-and-aft direction to accommodate overlapping, the steeling component assemblies 38, 40 are essentially mirror images of one another. Therefore, for the sake of brevity, the description of each steeling component assembly 38, 40 (particularly with respect to the connection to the corresponding support member) will be limited to the assembly shown in Fig. 12, with the understanding that the other assembly is similarly constructed.

The preferred steeling component assembly 38, 40 includes a post 66 to which the steeling component 64 is secured. As will be explained, the post 66 is rotatably supported on the respective support member 42, 44. The steeling component 64 is secured to the post 66 in any suitable manner (e.g., friction-fit, adhered, integrally formed, etc.) so that rotation of the post 66 corresponds with swinging movement of the component 64. The post 66 is preferably formed of the same material as the frame 36, although alternative post materials are within the scope of certain aspects of the present invention. The preferred post 66 is generally cylindrical in shape and includes a base portion 76 (defining the outermost cylindrical surface of the post 66) and a central flanged portion 78 projecting beyond the base portion. The base portion 76 and flanged portion 78 are spaced apart so as to define an annular recess 80. The base portion 76 of the post 66 is rotatably received in the aperture 62, with the inner end of the base portion 76 slidably engaging the front shoulder 70 to thereby limit (in the axial direction of the aperture) positioning of the post 66 within the aperture 62. The flanged portion 78 extends beyond the intermediate shoulder 72 and preferably also rotatably engages an aperture-defining surface 82 between the intermediate shoulder 72 and the back shoulder 74. The inner end of the flanged portion 78 preferably aligns (at least substantially) with the back shoulder 74. A threaded fastener 84 (preferably including a washer 86) is received in the flanged portion of the post 66. The fastener 84 engages the back shoulder 74 to secure the post 66 within the aperture 62.

The steeling component assembly 38, 40 preferably also includes a spring 88 for resiliently biasing the corresponding post 66, and thereby the corresponding steeling component 64, in a desired direction, as will be described. The illustrated spring 88 is located within the aperture 62 between the post 66 and support member 42, 44. More particularly, the preferred spring 88 includes a coil 90 extending between first and second spring ends 92, 94. The first spring end 92 is secured to the post 66 and the second spring end 94 is secured to the support member 42, 44, with the coil 90 preferably encircling the flanged portion 78. According to certain aspects of the present invention, the spring may be alternatively constructed (e.g., comprise a leaf spring, be integrated into the steeling component, etc.).

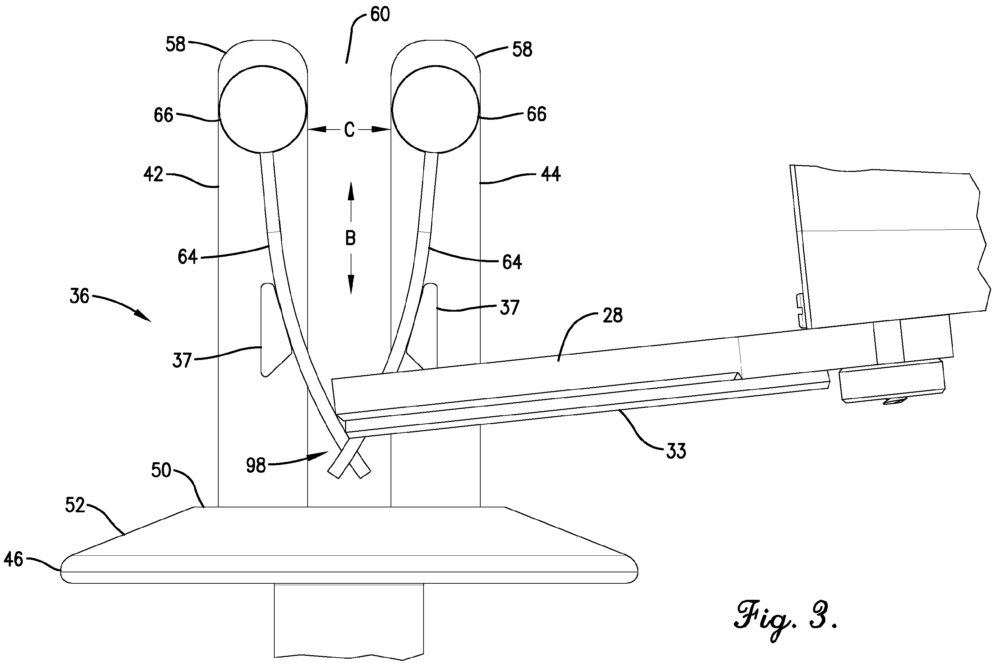

When viewing the front of the tool (e.g., Figs. 3, 6, 10, and 12), the springs 88 are arranged so that the steeling components 64 are biased toward one another. (In other words, when viewing the tool 20 from the front, the left post 66 is yieldably urged in a counterclockwise direction and the right post 66 is yieldably urged in a clockwise direction.) Again, the steeling components 64 are offset in a fore-and-aft direction so as to overlap one another and avoid any interference of relative swinging therebetween.

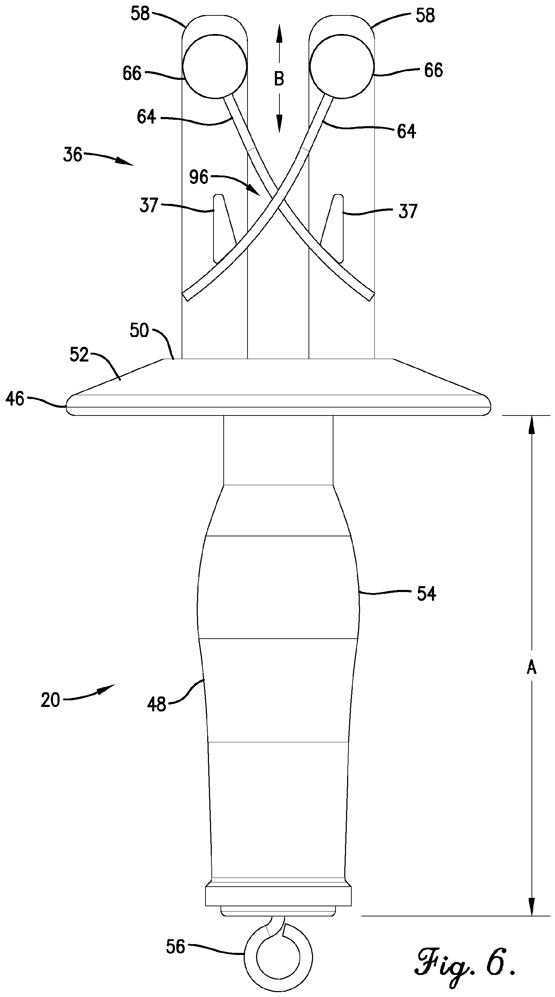

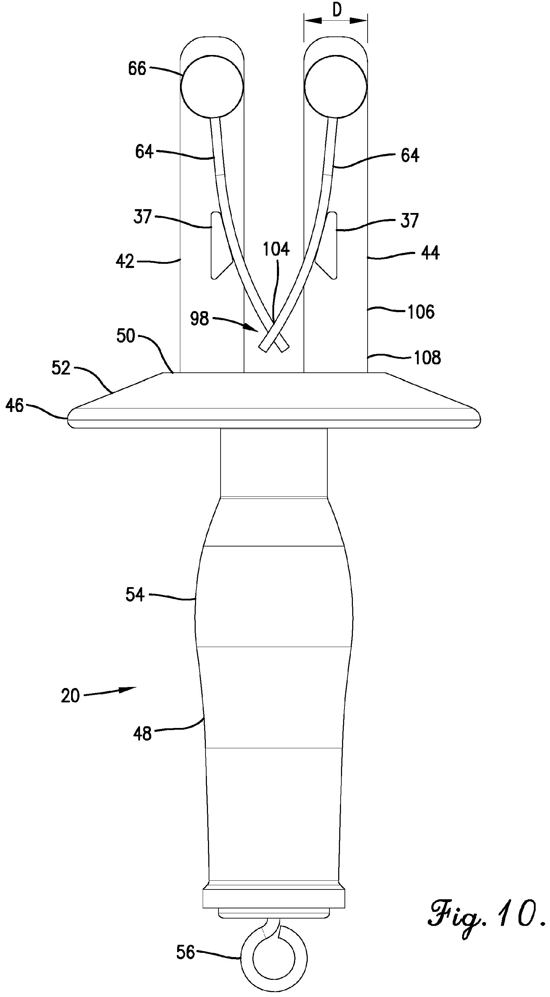

As noted, the illustrated stops 37 are provided to limit operational positioning of the steeling component assemblies 38,40. More particularly, each preferred stop 37 is configured to engage both of the steeling components 64. As shown in Fig. 6, each of the steeling components 64 has been biased into a first position 96, wherein the component contacts the stop 37 on the other support member 42, 44. Each steeling component 64 may be shifted against the bias of the corresponding spring 88 into a second position 98, in which the steeling component 64 contacts the stop 37 on corresponding support member 42, 44 (see Fig. 10). Therefore, the stops 37 cooperate to limit swinging of each steeling component 64 between the first and second positions 96, 98.

The preferred stops 37 are fixed to respective support members 42, 44 to project forwardly therefrom. Most preferably, each stop 37 is integrally formed with the corresponding support member 42, 44, although certain aspects of the present invention contemplate separately formed stops that are suitably secured to the respective support members (e.g., using adhesive, welding, fasteners, etc.).

In the illustrated embodiment, each stop 37 is a mirror image of the other, and the same reference numbers will be used to describe the features of each stop 37. Each illustrated stop 37 includes a pair of component-engaging surfaces 100, 102. The first component-engaging surface 100 faces generally downward toward the base 46 and contacts the opposite steeling component 64 when in the first position 96 (see Fig. 6). The second component-engaging surface 102 faces generally toward the other stop 37 and contacts the steeling component 64 mounted on the same support member 42, 44 when in the second position 98 (see Fig. 10). Because of the generally arcuate shape of the steeling components 64, the surfaces 100, 102 preferably have a complemental arcuate shape so that components 64 rest flush against the surfaces 100, 102. Except for this slight curvature, it may be said that the component-engaging surfaces of each stop 37 are angled relative to one another. The angle 104 defined between the surfaces 100, 102 is preferably between zero and one hundred eight degrees (0-180) and, more preferably, between ninety and one hundred eighty degrees (90-180). However, alternative stop configurations are with certain aspects of the present invention. For example, the stops may alternatively be shaped (e.g., have a simply pin or cylindrical shape) or may be located alternatively on the respective support member. Furthermore, according to some aspects of the invention, the stops may be alternatively shaped and/or located so as to vary the location of the first and second positions of on one or both of the steeling components or to engage only the steeling component supported on the same support member (rather than have each stop engage the steeling component supported on the opposite support member, as shown). Yet further, certain aspects of the present invention contemplate altogether eliminating the stops (or at least not restricting swinging movement of one or both of the steeling components in one direction).

The steeling components cooperatively define a knife interface 104 at the location at which the steeling components overlap, with the knife-interface 104 consequently being located within the knife-receiving slot 60. The interface 104 is designed to engage the cutting edge 33 and thereby steel (otherwise known as revive or align) the edge 33. Those ordinarily skilled in the art will appreciate that the interface 104 moves as the steeling components 64 shift between the first and second positions 96, 98 (compare Figs. 6 and 10). It may be said that the knife interface 104 is in a disengaged position ready to be contacted by the cutting edge when the steeling components are in the first position 96 (see Fig. 6), and the knife interface is in a relatively inwardly spaced terminal position when the steeling components are in the second position 98 (see Fig. 10). Shifting of the knife interface 104 along the knife-receiving slot 60 between the disengaged and terminal positions is effected by movement of the knife 22 and the bias of the springs 88. As perhaps best shown in Figs. 1-3, the knife interface 104 is shifted from the disengaged position toward the terminal position by bringing the cutting edge 33 into contact with the interface 104 and moving the cutting edge 33 progressively inward into the knife-receiving slot 60. The springs 88 serve to maintain contact between the steeling components 64 and cutting edge 33. Eventually, sufficient inward movement of the blade 24 within the knife-receiving slot 60 will cause the knife interface 104 to "bottom out" at the terminal position, once the steeling components 64 contact the respective second component-engaging surfaces of the stops 102. Once the blade 24 is moved outwardly along the knife-receiving slot 60, the springs 88 continue to urge the steeling components 64 against the cutting edge 33 and back toward the first position 96. If desired, during a steeling operation, the blade 24 may be reciprocated back and forth along the slot 60 while engaging one or both of the steeling components 64. It will also be understood that the steeling components 64 may not move symmetrically between their respective first and second positions 96, 98. For example, if the user positions the blade 24 closer to one support member 42, 44 than the other, the steeling component 64 supported on the one support member 42, 44 might move more than (and even bottom out in the second position 98 before) the other steeling component 64. Eventually, once the blade 24 is removed from the knife-receiving slot 60 and disengaged from the interface 104, each steeling component 64 is returned to the first position 96. It shall be understood that the location of the disengaged and terminal positions is dictated by the interaction of the steeling components 64 and stops 37, and the locations of the disengaged and terminal positions may consequently be varied by altering such interaction, as previously described.

In the illustrated embodiment, inward blade movement within the knife-receiving slot 60 is limited by the location of the terminal interface position. More particularly, because the knife interface 104 bottoms out at the terminal position, the blade 24 is not permitted to move inwardly any further. (Again, according to some aspects of the present invention, such limiting of blade movement within the slot 60 is not required.) It may consequently be said that each support member 42, 44 defines an outer portion 106 that extends outwardly relative to the terminal interface position. In particular regard to the illustrated embodiment, the outer portion 106 of the support member 42, 44 extends from a point that is aligned (along the slot axis) with the terminal interface position to the distal end of the member.

It has been determined that, with respect to steeling of rotary knives, the dimensions of the outer portion 106 of at least one of the support members 42, 44 is important. More particularly, in order to permit steeling of rotary knives 22, the relative sizing of the knife-receiving slot 60 and the outer portion 106 of at least one of the support members 42, 44 has been determined to provide a tool 20 capable of steeling rotary knives 22- a function unavailable to conventional steel designs. The knife-receiving slot 60 defines a cross-sectional dimension C measured between the support members 42, 44. (Although the slot 60 also has a fore-and-aft dimension measured between the aligned front and back faces of the support members 42, 44, the greater dimension is defined between the support members 42, 44 and will consequently be referred to herein as the cross-sectional dimension C. However, according to some aspects of the present invention, the slot cross-sectional dimension [at least in terms of a "maximum"] may be measured in a fore-and-aft or other direction). The outer portion 106 of each support member 42, 44 defines a cross-sectional dimension D that is perpendicular to the slot length. In the illustrated embodiment, because the support members 42, 44 are identical in shape, extend perpendicularly from the base 46, and are spaced apart equally along their length, the slot cross-section dimension C (measured at a right angle relative to the slot axis) is constant, and the cross-sectional dimension D of the outer portion 106 (apart from the rounded end) is similarly constant. However, as previously noted, certain aspects of the present invention contemplate different slot and support member shapes and configurations and therefore variable cross-sectional dimensions. It has specifically been determined that the maximum cross-sectional dimension D of the outer portion 106 of the at least one support member 42, 44 be less than about two (2) times the maximum cross-sectional dimension C of the of the slot 60. With the constant spacing between the support members 42, 44, the slot width C (and therefore the maximum cross-sectional dimension) is about 1.905 cm (three-quarter inch (¾")) to about 3.175 cm (one and one-quarter inches (1 ¼")). Each outer portion 106 of the support member 42, 44 is rectangular in shape (with the lateral (width) dimension being greater than the fore-and-aft dimension (thickness)), and the maximum cross-sectional dimension (width) is about between 0.635 cm and 1.905 cm (one-quarter inch (¼") and three-quarter inch (¾")). Most preferably, the widths of the slot 60 and the outer portion 106 of the support member are no more than about 1.905 cm (three-quarter inch (¾")).

It is further noted that the illustrated post 66 adds to the overall cross-sectional dimension of each assembled support member 42, 44 and steeling component assembly 38, 40. In the illustrated embodiment, the post 66 has a diameter (width) that generally corresponds to the lateral (width) dimension of the outer portion 106 of the support member 42, 44. However, the thickness of the post 66 (measured in a fore-and-aft direction) cooperates with the thickness of the outer portion 106 of the support member 42, 44 to define a combined post-support member cross-sectional dimension E that is greater than the width of the outer portion 106 of the support member 42, 44. It has been determined that the maximum post-support cross-sectional dimension E be less than about three (3) times the maximum slot cross-sectional dimension C. As previously noted, certain aspects of the present invention contemplate alternative (or entirely removed) post configurations, and the relationship between any combined post-support maximum cross-sectional dimension and the maximum slot cross-sectional dimension is preferably maintained. Along these lines, if in an alternative embodiment the fastener was not recessed within the support member but rather projected outwardly beyond the back face of the support member, this additional thickness (added to the overall cross-sectional dimension) would still satisfy the inventive relationship.

Each support member 42, 44 defines an inner portion 108 extending inwardly from the outer portion 106 (or the terminal position of the knife interface 104) to the base 46. In the illustrated embodiment, because the knife 22 is prevented from moving inwardly past the terminal interface position, the inner portion of the base 46 need not be limited to the dimensions noted above. For example, the principles of the present invention contemplate the inner portion 108 of each support member 42, 44 having a maximum cross-sectional dimension that is more than two (2) times greater than the maximum slot cross-sectional dimension C. In some embodiments, the inner portion 108 of each support member 42, 44 may be altogether eliminated.

In regard to use of the tool 20 to steel rotary knives 22, those of ordinary skill in the art will understand that the blade 24 must be received over only one of the support members 42, 44. Therefore, certain aspects contemplate a tool having only one of the support members dimensioned in the manner described above. That is to say, according to some principles of the present invention, it is only necessary for one of the steeling component assemblies to be supported on a support member configured to be received within the central blade opening of the rotary knife.
The use of the tool 20 shall be apparent from the foregoing description. Suffice it to say, the illustrated tool 20 is grasped by a user, and a knife (such as the rotary knife 22) is brought into operable engagement with the tool 20. If the knife 22 is held in one hand and the tool in another, this may be accomplished by moving both the knife 22 and tool 20 toward one another. Of course, it is also possible to hold one of the items stationary (e.g., the tool 20), and move the other (e.g., the knife 22) relative thereto. With the knife interface 104 in the disengaged position, the cutting edge 33 is initially brought into engagement with the interface 104. To ensure steeling contact between the cutting edge 33 and steeling components 64, the cutting edge 33 is shifted progressively into the knife-receiving slot 60. At some point, if the cutting edge 33 has been moved far enough into the knife-receiving slot 60, one or both of the steeling components 64 will engage the respective stop(s) 37. As previously noted, the cutting edge 33 may be moved inwardly and outwardly relative to the slot 60 multiple times during the steeling operation. Once the cutting edge 33 has been adequately steeled, the blade 24 is removed from the slot 60, and the steeling components 64 are biased back into the first position 96 (corresponding to the disengaged position of the knife interface 104). When steeling the illustrated rotary knife 22, one of the support members 42, 44 is received into the blade opening 34. While the blade 24 is rotating, the cutting edge 33 engages the knife interface 104 as described above. Preferably, a plane defined by the blade 24 (the plane being perpendicular to the blade rotational axis) is maintained generally perpendicular to the slot axis B, although an obtuse angular relationship is within the scope of certain aspects of the present invention. During steeling operations, the base 46 serves to protect the user's hand from inadvertent contact with the cutting edge 33.

Features of one or more embodiments described above may be used in various combinations with each other and/or may be used independently of one another. For instance, although a single disclosed embodiment may include a preferred combination of features, it is within the scope of certain aspects of the present invention for the embodiment to include only one (1) or less than all of the disclosed features, unless the specification expressly states otherwise or as might be understood by one of ordinary skill in the art. Therefore, embodiments of the present invention are not necessarily limited to the combination(s) of features described above.

The preferred forms of the invention described above are to be used as illustration only and should not be utilized in a limiting sense in interpreting the scope of the present invention. Obvious modifications to the exemplary embodiments, as hereinabove set forth, could be readily made by those skilled in the art without departing from the scope of the present invention, as defined by the claims.

## Claims

1. A tool (20) for steeling a rotary knife, the tool comprising:
a frame (36),
said frame (36) including first and second support members (42, 44),
said support members (42, 44) defining an elongated knife-receiving slot (60); and
a first steeling component (64) and a second steeling component (64) supported on the first and second support members (42, 44), respectively,
said first and second steeling components (64) being resiliently biased toward one another to define a knife interface (104) configured to engage and thereby steel the knife,
said knife interface (104) moving inwardly along the length of the knife-receiving slot (60) to a terminal interface position, as the knife engages the interface and is shifted inwardly through the knife-receiving slot (60),
said knife-receiving slot (60) having a maximum slot cross-sectional dimension defined between the support members (42, 44),
at least one of said support members (42, 44) presenting an outer portion (106) extending along the knife-receiving slot and disposed outward of the terminal interface position,
said outer portion (106) having a maximum member cross-sectional dimension (D) defined generally perpendicular to the length of the knife-receiving slot (60),
**characterized in that** said maximum member cross-sectional dimension (D) is less than two times the maximum slot cross-sectional dimension (C).

2. The tool of claim 1,
said maximum member cross-sectional dimension (D) being no more than 1.905 cm (¾ inches),
said maximum slot cross-sectional dimension (C) being no more than 1.905 cm (¾ inches).

3. The tool of claim 1,
said outer portion (106) of said at least one of the support members (42, 44) extending continuously between the terminal interface position to an outer end of the knife-receiving slot (60),
said outer portion (106) maintaining a constant shape along a length of the outer portion (106).

4. The tool of claim 3,
said first support member (42) and said second support member (44) being substantially similar in shape,
said first support member (42) and said second support member (44) having an orthogonal shape.

5. The tool of claim 4,
said orthogonal shape being rectangular.

6. The tool of claim 1,
said knife interface (104) being located at a disengaged interface position spaced outwardly relative to the terminal interface position, prior to the knife engaging the interface,
each of said steeling components (64) being shiftable between a first position (96), corresponding with the disengaged interface position, and a second position (98), corresponding with the terminal interface position.

7. The tool of claim 6, further comprising:
a first stop stationary relative to the frame (36),
said first stop engaging the first steeling component when the first steeling component is in the first position (96) thereof and engaging the second steeling component when the second steeling component is in the second position (98) thereof.

8. The tool of claim 7, further comprising:
a second stop spaced from the first stop,
said second stop being stationary relative to the frame (36),
said second stop engaging the first steeling component when the first steeling component is in the second position (98) thereof and engaging the second steeling component when the second steeling component is in the first position (96) thereof.

9. The tool of claim 8,
each of said first and second stops (37) being fixed relative to a corresponding one of the support members (42, 44).

10. The tool of claim 7,
said first stop presenting a first component-engaging surface (102) configured to contact the first steeling component and a second component-engaging surface (100) configured to contact the second steeling component,
said component-engaging faces (100, 102) being angled relative to one another.

11. The tool of claim 1,
said frame (36) including a handle (48) configured to be grasped by a user.

12. The tool of claim 11,
said frame (36) including a base (46),
said first and second support members (42, 44) extending from the base (46),
said handle (48) extending from the base (46) in a direction generally opposite the supporting members (42, 44).

13. The tool of claim 12,
said base (46) projecting radially relative to a slot axis (B) beyond the support members (42, 44).

14. The tool of claim 1,
a first steeling component assembly including the first steeling component (64); and
a second steeling component assembly including the second steeling component (64),
each of said steeling component assemblies including a post (66) rotatably coupled to the frame (36),
said post (37) being interconnected to the respective steeling component for rotation therewith, with the post (37) serving to support the respective steeling component (64) on the frame (36).

15. The tool of claim 14, said post (37) and said support member (42, 44) cooperatively defining a maximum post-support member cross-sectional dimension, said maximum post-support member cross-sectional dimension (D) being less than about three times the maximum slot cross-sectional dimension (C).

## Patentansprüche

1. Werkzeug (20) zum Schärfen eines Rotationsmessers, wobei das Werkzeug aufweist:
ein Gestell (36),
wobei das Gestell (36) erste und zweite Trägerteile (42, 44) umfasst,
wobei die Trägerteile (42, 44) einen länglichen Messeraufnahmeschlitz (60) definieren, und
eine erste Schleifkomponente (24) bzw. eine zweite Schleifkomponente (64), die an dem ersten bzw. an dem zweiten Trägerteil (42, 44) befestigt ist,
wobei die ersten und zweiten Schleifkomponenten (64) elastisch aufeinander zu vorgespannt sind, um eine Messerberührungsfläche (104) zu definieren, die dazu ausgestaltet ist, in Kontakt mit dem Messer zu kommen und dieses dadurch zu schärfen,
wobei die Messerberührungsfläche (104) sich entlang der Länge des Messeraufnahmeschlitzes (60) nach innen bis zu einer Berührungsflächenendposition bewegt, wenn das Messer an der Messerberührungsfläche anliegt und durch den Messeraufnahmeschlitz (60) nach innen geschoben wird,
wobei der Messeraufnahmeschlitz (60) eine zwischen den Trägerteilen (42, 44) definierte maximale Schlitzquerschnittsabmessung hat,
wobei wenigstens eines der Trägerteile (42, 44) einen äußeren Bereich (106) präsentiert, der entlang des Messeraufnahmeschlitzes verläuft und außerhalb von der Berührungsflächenendposition liegt,
wobei der äußere Bereich (106) eine maximale Teilquerschnittsabmessung (D) hat, die im Allgemeinen senkrecht zur Länge des Messeraufnahmeschlitzes (60) definiert ist,
**dadurch gekennzeichnet, dass** die maximale Teilquerschnittsabmessung (D) kleiner ist als das Zweifache der maximalen Schlitzquerschnittsabmessung (C).

2. Werkzeug nach Anspruch 1,
wobei die maximale Teilquerschnittsabmessung (D) nicht mehr als 1,905 cm (3/4 Zoll) beträgt,
wobei die maximale Schlitzquerschnittsabmessung (C) nicht mehr als 1,905 cm (3/4 Zoll) beträgt.

3. Werkzeug nach Anspruch 1,
wobei der äußere Bereich (106) des wenigstens einen der Trägerteile (42, 44) kontinuierlich zwischen der Berührungsflächenendposition zu einem äußeren Ende des Messeraufnahmeschlitzes (60) verläuft,
wobei der äußere Bereich (16) entlang einer Länge des äußeren Bereichs (106) eine konstante Form beibehält.

4. Werkzeug nach Anspruch 3,
wobei das erste Trägerteil (42) und das zweite Trägerteil (44) im Wesentlichen ähnliche Formen haben,
wobei das erste Trägerteil (42) und das zweite Trägerteil (44) eine orthogonale Form haben.

5. Werkzeug nach Anspruch 4,
wobei die orthogonale Form rechteckig ist.

6. Werkzeug nach Anspruch 1,
wobei die Messerberührungsfläche (104) sich in einer gelösten Berührungsflächenposition befindet, die auf Abstand nach außen relativ zur Berührungsflächenendposition liegt, bevor das Messer in Kontakt mit der Berührungsfläche kommt,
wobei jede der Schleifkomponenten (64) zwischen einer ersten Position (96), die der gelösten Berührungsflächenposition entspricht, und einer zweiten Position (98) verschiebbar ist, die der Berührungsflächenendposition entspricht.

7. Werkzeug nach Anspruch 6, das weiterhin aufweist:
einen ersten Anschlag, der relativ zum Gestell (36) ortsfest ist,
wobei der erste Anschlag an der ersten Schleifkomponente anliegt, wenn die erste Schleifkomponente in ihrer ersten Position (96) ist, und an der zweiten Schleifkomponente anliegt, wenn die zweite Schleifkomponente in ihrer zweiten Position (98) ist.

8. Werkzeug nach Anspruch 7, das weiterhin aufweist:
einen zweiten Anschlag, der auf Abstand zum ersten Anschlag liegt,
wobei der zweite Anschlag relativ zum Gestell (36) ortsfest ist,
wobei der zweite Anschlag an der ersten Schleifkomponente anliegt, wenn die erste Schleifkomponente in ihrer zweiten Position (98) ist, und an der zweiten Schleifkomponente anliegt, wenn die zweite Schleifkomponente in ihrer ersten Position (96) ist.

9. Werkzeug nach Anspruch 8,
wobei jeder der ersten und zweiten Anschläge (37) an einem entsprechenden der Trägerteile (42, 44) fixiert ist.

10. Werkzeug nach Anspruch 7,
wobei der erste Anschlag eine erste Komponentenanlagefläche (102) präsentiert, die dazu ausgestaltet ist, die erste Schleifkomponente zu kontaktieren, und eine zweite Komponentenanlagefläche (100) präsentiert, die dazu ausgestaltet ist, um die zweite Schleifkomponente zu kontaktieren,
wobei die Komponentenanlageflächen (100, 102) in einem Winkel zueinander liegen.

11. Werkzeug nach Anspruch 1,
wobei das Gestell (36) einen Griff (48) umfasst, der dazu ausgestaltet ist, um von einem Benutzer gegriffen zu werden.

12. Werkzeug nach Anspruch 11,
wobei das Gestell (36) eine Basis (46) umfasst,
wobei die ersten und zweiten Trägerteile (42, 44) von der Basis (46) ausgehend verlaufen,
wobei der Griff (48) von der Basis (46) in einer Richtung im Wesentlichen entgegengesetzt zu den Trägerteilen (42, 44) verläuft.

13. Werkzeug nach Anspruch 12,
wobei die Basis (46) radial relativ zu einer Schlitzachse (B) über die Trägerteile (42, 44) hinaus vorsteht.

14. Werkzeug nach Anspruch 1,
wobei ein erster Schleifkomponentenaufbau die erste Schleifkomponente (64) beinhaltet und
ein zweiter Schleifkomponentenaufbau die zweite Schleifkomponente (64) beinhaltet,
wobei jeder der ersten und zweiten Schleifkomponentenaufbauten eine Stange (66) aufweist, die drehbar mit dem Gestell (36) verbunden ist,
wobei die Stange (37) jeweils mit der jeweiligen Schleifkomponente zur Drehung mit dieser verbunden ist, wobei die Stange (37) zum Halten der jeweiligen Schleifkomponente (64) am Gestell (36) dient.

15. Werkzeug nach Anspruch 14,
wobei die Stange (37) und das Trägerteil (42, 44) zusammen eine maximale Stangen-Trägerteil-Querschnittsabmessung definieren,
wobei die maximale Stangen-Trägerteil-Querschnittsabmessung (D) kleiner als das Dreifache der maximalen Schlitzquerschnittsabmessung (C) ist.

## Revendications

1. Outil (20) pour affûter un couteau rotatif, l'outil comprenant:
un cadre (36),
ledit cadre (36) incluant des premier et second éléments de support (42, 44),
lesdits éléments de support (42, 44) définissant une fente de réception de couteau allongée (60); et
un premier composant d'affûtage (64) et un second composant d'affûtage (64) supportés sur les premier et second éléments de support (42, 44), respectivement,
lesdits premier et second composants d'affûtage (64) étant sollicités élastiquement l'un vers l'autre pour définir une interface de couteau (104) configurée pour venir en prise avec le couteau et ainsi pour l'affûter,
ladite interface de couteau (104) se déplaçant vers l'intérieur le long de la longueur de la fente de réception de couteau (60) vers une position d'interface terminale, lorsque le couteau vient en prise avec l'interface et est déplacé vers l'intérieur à travers la fente de réception de couteau (60),
ladite fente de réception de couteau (60) présentant une dimension de section transversale de fente maximale définie entre les éléments de support (42, 44),
au moins un certain desdits éléments de support (42, 44) présentant une partie extérieure (106) s'étendant le long de la fente de réception de couteau et disposée à l'extérieur de la position d'interface terminale,
ladite partie extérieure (106) présentant une dimension de section transversale d'élément maximale (D) définie généralement perpendiculaire à la longueur de la fente de réception de couteau (60),
**caractérisé en ce que** ladite dimension de section transversale d'élément maximale (D) est inférieure à deux fois la dimension de section transversale de fente maximale (C).

2. Outil selon la revendication 1,
ladite dimension de section transversale d'élément maximale (D) ne dépassant pas 1,905 cm (3/4 pouce),
ladite dimension de section transversale de fente maximale (C) n'étant pas supérieure à 1,905 cm (3/4 pouce).

3. Outil selon la revendication 1,
ladite partie extérieure (106) dudit au moins un certain des éléments de support (42, 44) s'étendant de manière continue entre la position d'interface terminale jusqu'à une extrémité extérieure de la fente de réception de couteau (60),
ladite partie extérieure (106) conservant une forme constante le long d'une longueur de la partie extérieure (106).

4. Outil selon la revendication 3,
ledit premier élément de support (42) et ledit second élément de support (44) présentant une forme sensiblement similaire,
ledit premier élément de support (42) et ledit second élément de support (44) présentant une forme orthogonale.

5. Outil selon la revendication 4, ladite forme orthogonale étant rectangulaire.

6. Outil selon la revendication 1,
ladite interface de couteau (104) étant située à une position d'interface libérée espacée vers l'extérieur par rapport à la position d'interface terminale, avant que le couteau ne vienne en prise avec l'interface,
chacun desdits composants d'affûtage (64) pouvant être déplacé entre une première position (96), correspondant à la position d'interface libérée, et une seconde position (98), correspondant à la position d'interface terminale.

7. Outil selon la revendication 6, comprenant en outre:
une première butée fixe par rapport au cadre (36),
ladite première butée venant en prise avec le premier composant d'affûtage lorsque le premier composant d'affûtage est dans la première position (96) de celui-ci, et venant en prise avec le second composant d'affûtage lorsque le second composant d'affûtage est dans la seconde position (98) de celui-ci.

8. Outil selon la revendication 7, comprenant en outre:
une seconde butée espacée de la première butée,
ladite seconde butée étant fixe par rapport au cadre (36),
ladite seconde butée venant en prise avec le premier composant d'affûtage lorsque le premier composant d'affûtage est dans la seconde position (98) de celui-ci, et venant en prise avec le second composant d'affûtage lorsque le second composant d'affûtage est dans la première position (96) de celui-ci.

9. Outil selon la revendication 8,
chacune desdites première et seconde butées (37) étant fixe par rapport à un certain correspondant des éléments de support (42, 44).

10. Outil selon la revendication 7,
ladite première butée présentant une première surface de mise en prise de composant (102) configurée pour venir en contact avec le premier composant d'affûtage et une seconde surface de mise en prise de composant (100) configurée pour venir en contact avec le second composant d'affûtage,
lesdites faces de mise en prise de composant (100, 102) étant inclinées l'une par rapport à l'autre.

11. Outil selon la revendication 1,
ledit cadre (36) incluant une poignée (48) configurée pour être saisie par un utilisateur.

12. Outil selon la revendication 11,
ledit cadre (36) incluant une base (46),
lesdits premier et second éléments de support (42, 44) s'étendant à partir de la base (46),
ladite poignée (48) s'étendant à partir de la base (46) dans une direction généralement opposée aux éléments de support (42, 44).

13. Outil selon la revendication 12,
ladite base (46) faisant saillie radialement par rapport à un axe de fente (B) au-delà des éléments de support (42, 44).

14. Outil selon la revendication 1,
un premier ensemble de composant d'affûtage incluant le premier composant d'affûtage (64); et
un second ensemble de composant d'affûtage incluant le second composant d'affûtage (64),
chacun desdits ensembles de composant d'affûtage incluant un montant (66) couplé de manière rotative au cadre (36),
ledit poteau (37) étant interconnecté au composant d'affûtage respectif pour tourner avec celui-ci, le poteau (37) servant à supporter le composant d'affûtage respectif (64) sur le cadre (36).

15. Outil selon la revendication 14,
ledit montant (37) et ledit élément de support (42, 44) définissant conjointement une dimension de section transversale d'élément de support-montant maximale,
ladite dimension de section transversale d'élément de support-montant maximale (D) étant inférieure à environ trois fois la dimension de section transversale de fente maximale (C).
